# EUROPÄISCHE PATENTSCHRIFT

(11) **EP 3 011 574 B1**
(45) Veröffentlichungstag und Bekanntmachung des Hinweises auf die Patenterteilung: **21.10.2020**
(21) Anmeldenummer: 14729354.2
(22) Anmeldetag: 12.06.2014
(51) Int. Cl.: F25D 23/00

(54) **KÄLTEGERÄT MIT EINEM ELEKTRISCHEN KONDENSATOR**
REFRIGERATION APPLIANCE HAVING AN ELECTRICAL CAPACITOR
APPAREIL FRIGORIFIQUE POURVU D'UN CONDENSATEUR ÉLECTRIQUE

(30) Priorität: 20.06.2013 DE 102013211729
(43) Veröffentlichungstag der Anmeldung: 27.04.2016
(73) Patentinhaber: BSH Hausgeräte GmbH, 81739 München (DE)
(72) Erfinder: FÄHNLE, Elmar, 89275 Elchingen (DE); KRAPP, Michael, 89564 Nattheim (DE); YILMAZ, Selcuk, 89522 Heidenheim (DE)
(86) Internationale Anmeldenummer: PCT/EP2014/062209
(87) Internationale Veröffentlichungsnummer: WO 2014/202452

(56) Entgegenhaltungen:
- EP-A1- 0 693 758
- DE-C1- 10 105 863
- JP-U- S5 315 034
- JP-U- S51 128 237
- JP-U- S52 127 244
- JP-U- S52 134 167
- JP-U- S52 165 251

## Beschreibung

Die vorliegende Erfindung betrifft ein Kältegerät mit einem Aufnahmegehäuse, in das ein elektrischer Kondensator eingelegt ist.

Die Druckschrift DE 10 2011 004 594 A1 betrifft ein Kältegerät mit einem Verdichter und einem dem Verdichter zugeordneten elektrischen Kondensator. In dem Kondensator befindet sich ein Öl, das sich bei einer Erwärmung des Kondensators ausdehnt. Erwärmt sich der Kondensator zu stark, wird bei der Ausdehnung eine im Inneren des Kondensators angeordnete leitende Verbindung durchtrennt, so dass der Kondensator von einer Stromquelle getrennt wird und sich nicht noch weiter erwärmt. Der Kondensator ist in einem Gehäuse angeordnet, in dem dieser an seiner kabellosen Seite mit einem Gewinde befestigt ist. Bei einem Defekt dehnt sich der Kondensator daher an der entgegengesetzten Kabelseite aus, an der das Kabel für den elektrischen Betrieb des Kondensators angeordnet ist. In dem Gehäuse ist daher ein Freiraum für eine Kabelschleife an der Kabelseite des Kondensators vorgesehen. Die Kabelschleife wird benötigt, damit sich der Kondensator sich im Falle einer Störung ohne Hindernisse ausdehnen kann. Diese Kabelschleife wird bei der Montage am Montageband durch den Mitarbeiter gelegt und erhöht den Produktionsaufwand.

JP S53 15034 U8 offenbart in den Figuren ein elektrischen Bauteil, welches ein Gehäuse sowie elektrische Anschlüsse aufweist.

DE 101 05 863 C1 offenbart einen Kondensator mit einem Bechergehäuse, umfassend einen Außenbecher, der durch ein Verschlussteil abgedichtet wird. Innerhalb des Außenbechers befindet sich ein Innenbecher, der einen Kondensatorwickel in einem mit Öl gefüllten Raum aufnimmt.

Es ist die der Erfindung zugrundeliegende Aufgabe, ein Kältegerät anzugeben, bei dem der Materialaufwand reduziert und der Montageablauf bei der Fertigung rationalisiert ist.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch ein Kältegerät mit einem Aufnahmegehäuse gelöst, in das ein elektrischer Kondensator zum Begrenzen eines Anlaufstromes eines Verdichters eingelegt ist, der eine Kabelseite und eine kabellose Seite aufweist, bei dem das Aufnahmegehäuse einen Freiraum zum Ausdehnen des Kondensators an der kabellosen Seite des Kondensators aufweist. Der Kondensator dient beispielsweise zum Begrenzen eines Anlaufstromes eines Verdichters. Dadurch wird beispielsweise der technische Vorteil erreicht, dass auf eine Kabelschleife zum Kompensieren einer Ausdehnung des Kondensators im Inneren des Aufnahmegehäuses verzichtet werden kann, so dass sich der Materialaufwand reduziert und eine Montage vereinfacht wird.

Unter einem Kältegerät wird insbesondere ein Haushaltskältegerät verstanden, also ein Kältegerät, das zur Haushaltsführung in Haushalten oder im Gastronomiebereich eingesetzt wird, und insbesondere dazu dient Lebensmittel und/oder Getränke bei bestimmten Temperaturen zu lagern, wie beispielsweise ein Kühlschrank, ein Gefrierschrank, eine Kühlgefrierkombination, eine Gefriertruhe oder ein Weinkühlschrank.

Gemäß der vorliegenden Erfindung des Kältegeräts umfasst das Aufnahmegehäuse eine erste und eine zweite Gehäuseschale. Dadurch wird beispielsweise der technische Vorteil erreicht, dass das Aufnahmegehäuse auf einfache Weise gebildet wird und in der Lage ist, den Kondensator umfänglich aufzunehmen.

In einer weiteren vorteilhaften Ausführungsform des Kältegeräts sind die erste und die zweite Gehäuseschale mit einem Scharnier verbunden. Dadurch wird beispielsweise der technische Vorteil erreicht, dass die beiden Gehäuseschalen drehbar miteinander verbunden sind und bei einem Montageprozess der Kondensator in einfacher Weise durch Zuklappen der Gehäuseschalen montiert werden kann.

In einer weiteren vorteilhaften Ausführungsform des Kältegeräts ist das Scharnier ein Filmscharnier. Dadurch wird beispielsweise der technische Vorteil erreicht, dass das Scharnier mit geringem technischem Aufwand und ohne die Verwendung von Einzelteilen hergestellt ist.

In einer weiteren vorteilhaften Ausführungsform des Kältegeräts umfasst das Aufnahmegehäuse ein Rastmittel zum Verrasten der ersten und der zweiten Gehäuseschale. Dadurch wird beispielsweise der technische Vorteil erreicht, dass ein einmal zugeklapptes Aufnahmegehäuse nicht ohne weiteres geöffnet werden kann und sich eine Montage noch weiter beschleunigt.

In einer weiteren vorteilhaften Ausführungsform des Kältegeräts umfasst die erste Gehäuseschale einen ersten Teil einer Öffnung zum Einlegen eines Kabels und die zweite Gehäuseschale einen zweiten Teil einer Öffnung zum Einlegen des Kabels. Dadurch wird beispielsweise der technische Vorteil erreicht, dass das Kabel zu dem Kondensator in einfacher Weise in dem Aufnahmegehäuse verlegt werden kann.

Gemäß der vorliegenden Erfindung des Kältegeräts umfasst die erste Gehäuseschale und/oder die zweite Gehäuseschale an der Innenseite Abstandsrippen zum Beabstanden des eingelegten Kondensators von der Innenseite des Aufnahmegehäuses. Dadurch wird beispielsweise der technische Vorteil erreicht, dass der Kondensator mit einem Abstand zur Innenseite des Aufnahmegehäuses gehalten wird und eine Ausdehnung des Kondensators nicht behindert wird.

Gemäß der vorliegenden Erfindung des Kältegeräts sind die Abstandrippen an der Kabelseite des Kondensators auf der Innenseite des Aufnahmegehäuses umlaufend angeordnet. Dadurch wird beispielsweise der technische Vorteil erreicht, dass diejenige Seite des Kondensators, an der das Kabel befestigt ist, unverrückbar in dem Aufnahmegehäuse befestigt ist.

In einer weiteren vorteilhaften Ausführungsform des Kältegeräts sind die Abstandrippen an der kabellosen Seite des Kondensators auf der Innenseite in Längsrichtung des Aufnahmegehäuses angeordnet. Dadurch wird beispielsweise der technische Vorteil erreicht, dass sich die kabellose Seite des Kondensators in Längsrichtung ausdehnen kann und bei der Ausdehnung geführt wird.

In einer weiteren vorteilhaften Ausführungsform des Kältegeräts weist das Aufnahmegehäuse eine Zylinderform auf. Dadurch wird beispielsweise der technische Vorteil erreicht, dass das Aufnahmegehäuse mit einem geringen Materialaufwand gebildet werden kann.

In einer weiteren vorteilhaften Ausführungsform des Kältegeräts umfasst das Aufnahmegehäuse an einem Ende der Zylinderform eine Öffnung zum Einführen eines Stromkabels. Dadurch wird beispielsweise der technische Vorteil erreicht, dass das Stromkabel an einer besonders geeigneten Stelle in das Innere der Zylinderform geführt wird.

In einer weiteren vorteilhaften Ausführungsform des Kältegeräts ist der Kondensator vom dem Aufnahmegehäuse an einer Mantelfläche des Kondensators aufgenommen. Dadurch wird beispielsweise der technische Vorteil erreicht, dass der Kondensator in stabiler Weise durch das Aufnahmegehäuse fixiert wird.

In einer weiteren vorteilhaften Ausführungsform des Kältegeräts ist das Aufnahmegehäuse ein Kunststoffgehäuse. Dadurch wird beispielsweise der technische Vorteil erreicht, dass das Aufnahmegehäuse mit technisch einfachen Mitteln herstellbar ist und elektrisch isolierend ausgebildet ist.

In einer weiteren vorteilhaften Ausführungsform des Kältegeräts ist das Aufnahmegehäuse auf eine Tragschiene für einen Verdichter montierbar. Dadurch wird beispielsweise der technische Vorteil erreicht, dass das Aufnahmegehäuse in einem festen Abstand zum Verdichter montiert werden kann.

In einer weiteren vorteilhaften Ausführungsform des Kältegeräts umfasst das Aufnahmegehäuse ein Rastmittel zum Befestigen des Aufnahmegehäuses auf der Tragschiene. Dadurch wird beispielsweise der technische Vorteil erreicht, dass eine schnelle Montage des Aufnahmegehäuses erreicht wird.

Ausführungsbeispiele der Erfindung sind in den Zeichnungen dargestellt und werden im Folgenden näher beschrieben.

Es zeigen:
Fig. 1 eine schematische Ansicht eines Kältegerätes;
Fig. 2 eine Ansicht eines Aufnahmegehäuses in einem Kältegerät aus dem Stand der Technik das nicht unter dem Gegenstand der vorliegenden Anmeldung fällt;
Fig. 3 ein aufgeklapptes Aufnahmegehäuse mit eingelegtem Kondensator gemäß der vorliegenden Erfindung;
Fig. 4 ein aufgeklapptes und ein zugeklapptes Aufnahmegehäuse gemäß der vorliegenden Erfindung; und
Fig. 5 eine Tragschiene mit dem Aufnahmegehäuse und einem Verdichter.

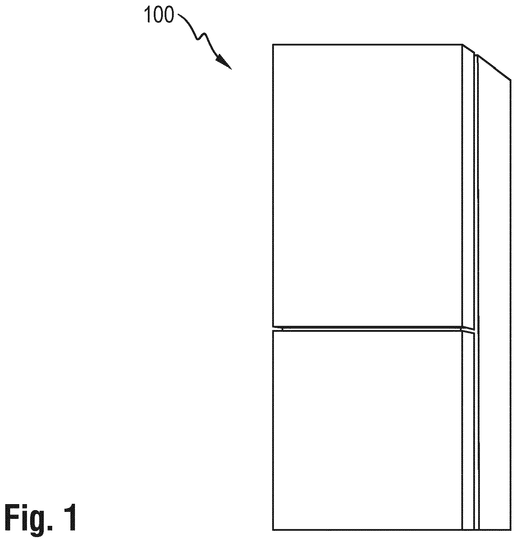

Fig. 1 zeigt einen Kühlschrank stellvertretend für ein Kältegerät 100 mit einer oberen Kühlschranktür und einer unteren Kühlschranktür. Der Kühlschrank dient beispielsweise zur Kühlung von Lebensmitteln und umfasst einen Kältemittelkreislauf mit einem Verdampfer, einem Verdichter, einem Verflüssiger und einem Drosselorgan. Der Verdampfer ist ein Wärmeaustauscher, in dem nach der Expansion das flüssige Kältemittel durch Wärmeaufnahme von dem zu kühlenden Medium, d.h. der Luft im Inneren des Kühlschranks, verdampft wird.

Der Verflüssiger ist ein Wärmeaustauscher, in dem nach der Kompression das verdampfte Kältemittel durch Wärmeabgabe an ein äußeres Kühlmedium, d.h. die Umgebungsluft, verflüssigt wird. Das Drosselorgan ist eine Vorrichtung zur ständigen Verminderung des Druckes durch Querschnittsverengung.

Das Kältemittel ist ein Fluid, das für die Wärmeübertragung in dem kälteerzeugenden System verwendet wird, das bei niedrigen Temperaturen und niedrigem Druck des Fluids Wärme aufnimmt und bei höherer Temperatur und höherem Druck des Fluids Wärme abgibt, wobei üblicherweise Zustandsänderungen des Fluids inbegriffen sind.

Der Verdichter ist ein mechanisch betriebenes Bauteil, das Kältemitteldampf vom Verdampfer absaugt und bei einem höheren Druck zum Verflüssiger ausstößt Für den Betrieb des Verdichters wird ein elektrischer Kondensator verwendet, der den Anlaufstrom des Verdichters begrenzt.

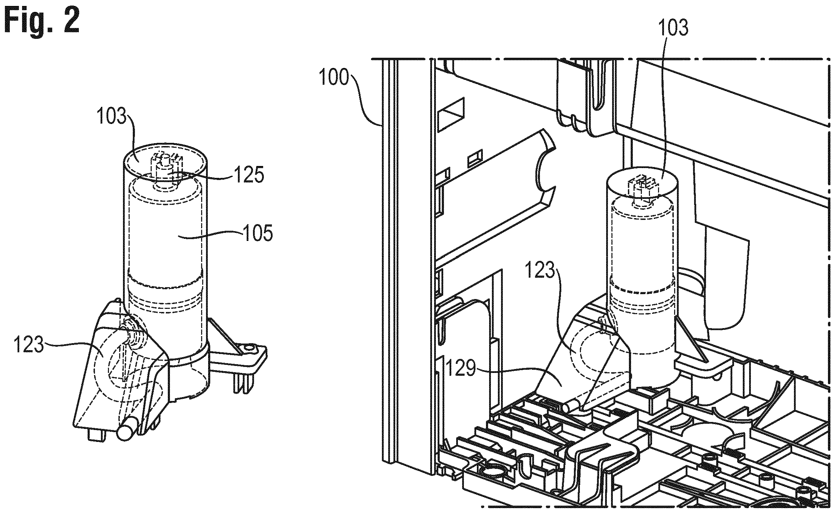

Fig. 2 zeigt eine Ansicht eines Aufnahmegehäuses 127 in einem Kältegerät 100. In dem Aufnahmegehäuse 127 ist ein elektrischer Kondensator 105 zum Betrieb des Verdichters aufgenommen. Der Kondensator 105 ist an einer kabellosen Seite mit einem Gewinde 125 an dem Aufnahmegehäuse 127 befestigt. Eine Ausdehnung des Kondensators 105 findet daher zu dessen Kabelseite hin statt. Zu diesem Zweck ist in dem Aufnahmegehäuse 127 ein Freiraum 129 für eine Kabelschleife 123 vorgehalten. Die Kabelschleife 123 ermöglicht, dass sich der Kondensator 105 sich im Falle einer Störung ohne Hindernisse ausdehnen kann. Die Kabelschleife 123 wird bei der Montage am Montageband manuell durch einen Mitarbeiter gelegt. Diese Vorgehensweise verlangsamt den Produktionsablauf.

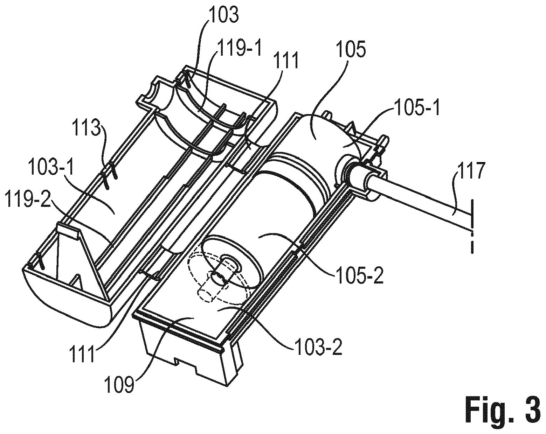

Fig. 3 zeigt eine Ansicht des Kondensators 105 in einem Aufnahmegehäuse 103. Der Kondensator 105 weist eine Kabelseite 105-1 und eine kabellose Seite 105-2 auf. An der Kabelseite 105-1 befindet sich ein Kabel 117 zum Betrieb und zur Versorgung des Kondensators 105. Das Aufnahmegehäuse 103 umfasst einen Freiraum 109 zum Ausdehnen des Kondensators 105 an der kabellosen Seite 105-2 des Kondensators 105. Der Freiraum 109 ist im Inneren des Aufnahmegehäuses 103 angeordnet. Bei einer Erwärmung dehnt sich der Kondensator 105 in den Freiraum 109 hinein aus.

An der Kabelseite 105-1 ist der Kondensator 105 im Aufnahmegehäuse 103 fixiert. Der Kondensator 105 ist daher nicht am Gewinde befestigt, sondern an der Mantelfläche des Kondensatorgehäuses aufgenommen. In diesem Fall kann auf das Gewinde zur Befestigung des Kondensators 105 verzichtet werden, so dass sich ein Materialaufwand verringert.

Bei dieser Art der Montage des Kondensators 105 kann auf eine Kabelschleife 123 verzichtet werden, da sich der Kondensator 105 im unteren kabellosen Bereich ausdehnen kann und an der Kabelseite 103-2 fixiert ist. Ein Ausdehnen des Kondensators 105 bei einem Störfall kann daher ermöglicht werden. Durch den Wegfall der Kabelschleife 123 wird der zugehörige Montageaufwand eingespart.

Das Aufnahmegehäuse 103 umfasst zwei Gehäuseschalen 103-1 und 103-2, die zwei Hälften bilden und mit einem Filmscharnier 111verbunden sind. Durch die geometrische Auslegung des Aufnahmegehäuses 103 sind die Approbationsanforderungen erfüllt. Das Aufnahmegehäuse 103 ist ein Kunststoffgehäuse, so dass auf eine Erdung des Kondensators 105 verzichtet werden kann, beispielsweise ein Spritzgussformteil.

Das Aufnahmegehäuse 103 umfasst ein Rastmittel 113 zum Verrasten der beiden Gehäuseschale 103-1 und 103-2. Das Rastmittel 113 ist in der Mitte des Aufnahmegehäuses 103 angeordnet. Die erste Gehäuseschale 103-1 umfasst einen federnden Rastarm, der beim Zusammenklappen einen Rastvorsprung in der anderen Gehäuseschale 103-2 übergreift und dann einrastet. Dadurch wird das Aufnahmegehäuse 103 nach dem Zusammenklappen automatisch verriegelt.

Im Inneren des Aufnahmegehäuses 103 sind Abstandsrippen 119-1 und 119-2 gebildet, auf denen der Kondensator 105 aufliegt und durch die der Kondensator 105 von der Innenwand des Aufnahmegehäuses 103 beabstandet wird. Die Abstandsrippen 119-1 und 119-2 ragen auf der Innenseite des Aufnahmegehäuses 103 hervor. Bei eingelegtem Kondensator 105 entsteht so zwischen der Innenwand des Aufnahmegehäuses 103 und der Außenseite des Kondensators 105 ein Spalt.

Die beiden unteren Abstandsrippen 119-1 laufen im Bereich der Kabelseite 105-1 des Kondensators 105 auf der Innenseite des Aufnahmegehäuses 103 herum. Dadurch wird der Kondensator 105 fest zwischen beiden Gehäuseschalen 103-1 und 103-2 an der Kabelseite 105-1 eingeklemmt. Im Bereich der kabellosen Seite 105-2 verlaufen die Abstandrippen 119-2 auf der Innenseite des Aufnahmegehäuses 103 in Längsrichtung. Durch diese Anordnung wird die Ausdehnung des Kondensators 105 durch die Längsrippen 119-2 nicht behindert, während der Kondensator 105 geführt wird.

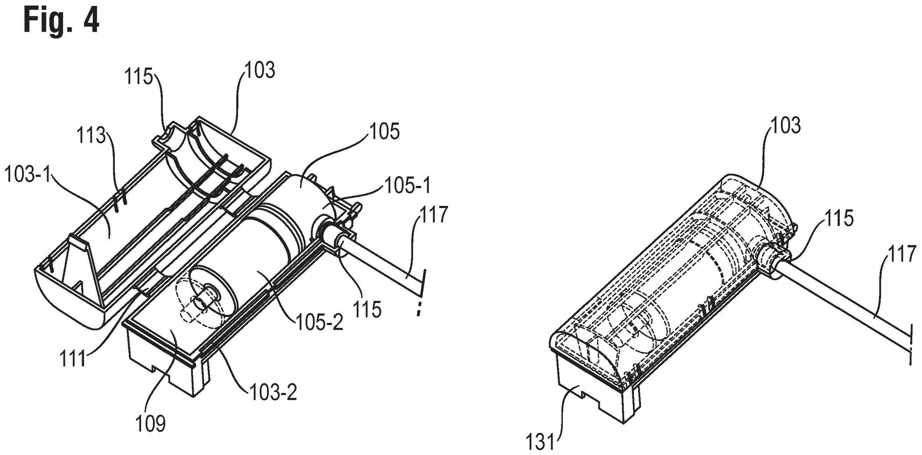

Fig. 4 zeigt ein aufgeklapptes und ein zugeklapptes Aufnahmegehäuse 103. Das zugeklappte Aufnahmegehäuse 103 weist eine zylindrische Grundform auf und umgibt die Mantelfläche des Kondensators 105. In der einen Gehäuseschale 103-1 ist ein Teil einer Öffnung 115 zum Einlegen eines Kabels 117 und der zweiten Gehäuseschale 103-2 ist ein anderer Teil einer Öffnung 115 zum Einlegen des Kabels 117 gebildet. Das Aufnahmegehäuse 103 weist nach dem Zusammenklappen der beiden Gehäuseschalen 103-1 und 103-2 im Wesentlichen eine Zylinderform auf. Die Öffnung 115 befindet sich im Bereich des unteren Endes der Zylinderform. Zusätzlich umfasst das Aufnahmegehäuse 103 einen Montageabschnitt 131, mit dem das Aufnahmegehäuse 103 an einer Tragschiene befestigt werden kann.

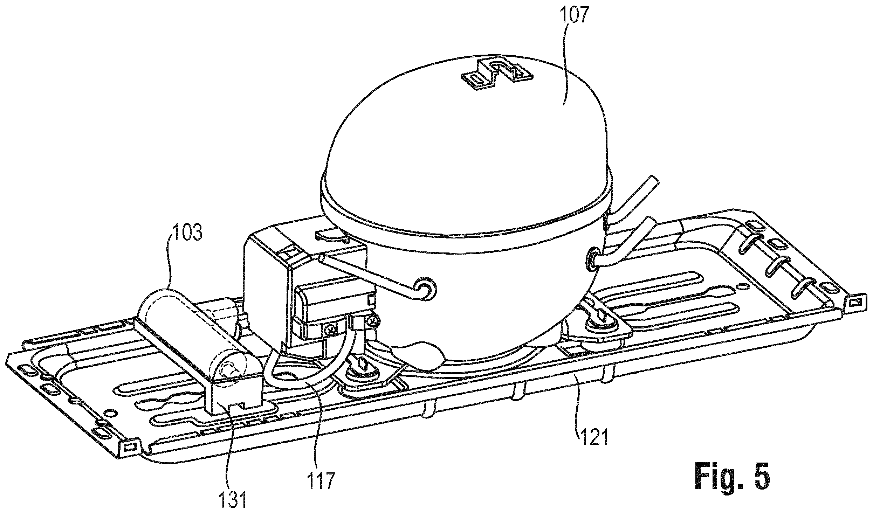

Fig. 5 zeigt eine Tragschiene 121 mit dem Aufnahmegehäuse 103 und einem Verdichter 107. Die Tragschiene 121 wird bei der Produktion zusammen mit dem Verdichter 107 und dem Aufnahmegehäuse 103 in das Kältegerät 100 eingesetzt. Die Montage des Aufnahmegehäuses 103 erfolgt beispielsweise mittels Rasthaken, mit denen ein Formschluss erreicht wird, oder einer Schraube auf der Tragschiene 121.

Das Aufnahmegehäuse 103 mit dem Kondensator 105 wird in einem einheitlichen Abstand vom Verdichter 107 auf der Tragschiene 121 montiert. Für Kältegeräte 100 mit unterschiedlichen Breiten, wie beispielsweise von 600 mm bis 860 mm, werden ebenfalls Tragschienen 121 unterschiedlicher Breite verwendet. Bei einheitlichem Abstand zwischen dem Verdichter 107 und dem auf der Tragschiene 121 angeordneten Aufnahmegehäuse 103, kann eine einheitliche Länge des Kabels 117 verwendet werden. In diesem Fall kann über eine ganze Baureihe von Kältegeräten 100 eine einheitliche Kabellänge verwendet werden. Dadurch ergibt sich eine breitenunabhängige Lösung für die Aufnahme des Kondensators 105. Der Materialaufwand wird reduziert und der Montageablauf rationalisiert.

Der Kondensator 105 und das Aufnahmegehäuse 103 können als Baugruppe vormontiert werden. Das Aufnahmegehäuse 103 ermöglicht eine einfachere Montage, da bei der Produktion keine Kabelschleife 123 gelegt wird. Zudem weist das Aufnahmegehäuse 103 keinen Hohlraum für die Kabelschleife 123 auf, so dass sich ein optimierter Materialeinsatz ergibt. Der Aufbau des Kondensators 105 kann vereinfacht werden, da eine Mutter und ein Gewindebolzen am Kondensator 105 entfallen können. Das Aufnahmegehäuse 103 kann im Allgemeinen an einer beliebigen Stelle im Kältegerät vorgesehen sein, beispielsweise im Maschinenraum.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Kältegerät
- 103: Aufnahmegehäuse
- 103-1: Gehäuseschale
- 103-2: Gehäuseschale
- 105: Kondensator
- 105-1: Kabelseite
- 105-2: kabellose Seite
- 107: Verdichter
- 109: Freiraum
- 111: Scharnier
- 113: Rastmittel
- 115: Öffnung
- 117: Kabel
- 119-1: Abstandrippen
- 119-2: Abstandrippen
- 121: Tragschiene
- 123: Kabelschleife
- 125: Gewinde
- 127: Aufnahmegehäuse
- 129: Freiraum

## Patentansprüche

1. Kältegerät (100) mit einem Aufnahmegehäuse (103), in das ein elektrischer Kondensator (105) eingelegt ist, der eine Kabelseite (105-1) und eine kabellose Seite (105-2) aufweist, **dadurch gekennzeichnet, dass** das Aufnahmegehäuse (103) einen Freiraum (109) zum Ausdehnen des Kondensators (105) an der kabellosen Seite (105-2) des Kondensators (105) aufweist, wobei das Aufnahmegehäuse (103) eine erste und eine zweite Gehäuseschale (103-1, 103-2) umfasst, wobei die erste Gehäuseschale (103-1) und/oder die zweite Gehäuseschale (103-1) an der Innenseite Abstandsrippen (119-1, 119-2) zum Beabstanden des eingelegten Kondensators (115) von der Innenseite des Aufnahmegehäuses (103) umfasst, wobei die Abstandrippen (119-1) an der Kabelseite (105-1) des Kondensators (105) auf der Innenseite des Aufnahmegehäuses (103) umlaufend angeordnet sind.

2. Kältegerät (100) nach Anspruch 1, **dadurch gekennzeichnet, dass** die erste und die zweite Gehäuseschale (103-1, 103-2) mit einem Scharnier (111) verbunden sind.

3. Kältegerät (100) nach Anspruch 2, **dadurch gekennzeichnet, dass** das Scharnier (111) ein Filmscharnier ist.

4. Kältegerät (100) nach einem der Ansprüche 1 bis 3, **dadurch gekennzeichnet, dass** das Aufnahmegehäuse (103) ein Rastmittel (113) zum Verrasten der ersten und der zweiten Gehäuseschale (103-1, 103-2) umfasst.

5. Kältegerät (100) nach einem der Ansprüche 1 bis 4, **dadurch gekennzeichnet, dass** die erste Gehäuseschale (103-1) einen ersten Teil einer Öffnung (115) zum Einlegen eines Kabels (117) und die zweite Gehäuseschale (103-2) einen zweiten Teil einer Öffnung (115) zum Einlegen des Kabels (117) umfasst.

6. Kältegerät (100) nach einem der vorangehenden Ansprüche, **dadurch gekennzeichnet, dass** die Abstandrippen (119-2) an der kabellosen Seite (105-2) des Kondensators (105) auf der Innenseite in Längsrichtung des Aufnahmegehäuses (103) angeordnet sind.

7. Kältegerät (100) nach einem der vorangehenden Ansprüche, **dadurch gekennzeichnet, dass** das Aufnahmegehäuse (103) eine Zylinderform aufweist.

8. Kältegerät (100) nach Anspruch 7, **dadurch gekennzeichnet, dass** das Aufnahmegehäuse (103) an einem Ende der Zylinderform eine Öffnung (115) zum Einführen eines Stromkabels (117) umfasst.

9. Kältegerät (100) nach einem der vorangehenden Ansprüche, **dadurch gekennzeichnet, dass** der Kondensator (105) vom dem Aufnahmegehäuse (103) an einer Mantelfläche des Kondensators (105) aufgenommen ist.

10. Kältegerät (100) nach einem der vorangehenden Ansprüche, **dadurch gekennzeichnet, dass** das Aufnahmegehäuse (103) ein Kunststoffgehäuse ist.

11. Kältegerät (100) nach einem der vorangehenden Ansprüche, **dadurch gekennzeichnet, dass** das Aufnahmegehäuse (103) auf eine Tragschiene (121) für einen Verdichter (107) montierbar ist.

12. Kältegerät (100) nach Anspruch 11, **dadurch gekennzeichnet, dass** das Aufnahmegehäuse (103) ein Rastmittel zum Befestigen des Aufnahmegehäuses (103) auf der Tragschiene (121) umfasst.

## Claims

1. Refrigeration appliance (100) with a receiving housing (103), into which an electrical capacitor (105) is inserted, which has a cable side (105-1) and a cable free side (105-2), **characterised in that** the receiving housing (103) has a clearance (109) for extending the capacitor (105) on the cable free side (105-2) of the capacitor (105), wherein the receiving housing (103) comprises a first and a second housing shell (103-1), (103-2), wherein on the interior the first housing shell (103-1) and/or the second housing shell (103-1) comprises spacer fins (119-1, 119-2) for distancing the inserted capacitor (115) from the interior of the receiving housing (103), wherein the spacer fins (119-1) on the cable side (105-1) of the capacitor (105) are arranged so as to rotate around the interior of the receiving housing (103).

2. Refrigeration appliance (100) according to claim 1, **characterised in that** the first and the second housing shell (103-1), 103-2) are connected to a hinge (111).

3. Refrigeration appliance (100) according to claim 2, **characterised in that** the hinge (111) is an integral hinge.

4. Refrigeration appliance (100) according to one of claims 1 to 3, **characterised in that** the receiving housing (103) comprises a latching means (113) for latching the first and the second housing shell (103-1, 103-2).

5. Refrigeration appliance (100) according to one of claims 1 to 4, **characterised in that** the first housing shell (103-1) comprises a first part of an opening (115) for inserting a cable (117) and the second housing shell (103-2) comprises a second part of an opening (115) for inserting the cable (117).

6. Refrigeration appliance (100) according to one of the preceding claims, **characterised in that** the spacer fins (119-2) on the cable free side (105-2) of the capacitor (105) are arranged on the interior in the longitudinal direction of the receiving housing (103).

7. Refrigeration appliance (100) according to one of the preceding claims, **characterised in that** the receiving housing (103) has a cylinder shape.

8. Refrigeration appliance (100) according to claim 7, **characterised in that** at one end of the cylinder shape the receiving housing (103) has an opening (115) for inserting a power cable (117).

9. Refrigeration appliance (100) according to one of the preceding claims, **characterised in that** the capacitor (105) is received by the receiving housing (103) on a lateral area of the capacitor (105).

10. Refrigeration appliance (100) according to one of the preceding claims, **characterised in that** the receiving housing (103) is a plastic housing.

11. Refrigeration appliance (100) according to one of the preceding claims, **characterised in that** the receiving housing (103) can be assembled on a bearing rail (121) for a compressor (107).

12. Refrigeration appliance (100) according to claim 11, **characterised in that** the receiving housing (103) comprises a latching means for fastening the receiving housing (103) on the bearing rail (121).

## Revendications

1. Appareil frigorifique (100) comprenant un boîtier de réception (103), dans lequel un condensateur électrique (105) est disposé, lequel condensateur comprend un côté avec câble (105-1) et un côté sans câble (105-2),
**caractérisé en ce que** le boîtier de réception (103) présente un espace libre (109) pour l'extension du condensateur (105) sur le côté sans câble (105-2) du condensateur (105), dans lequel le boîtier de réception (103) comprend une première et une seconde coques de boîtier (103-1, 103-2), dans lequel la première coque de boîtier (103-1) et/ou la seconde coque de boîtier (103-2) comprend des nervures d'écartement (119-1, 119-2) sur le côté intérieur pour écarter le condensateur (105) inséré vis-à-vis du côté intérieur du boîtier de réception (103), dans lequel les nervures d'écartement (119-1) du côté avec câble (105-1) du condensateur (105) sont disposées sur le côté intérieur du boîtier de réception (3) de manière à l'entourer.

2. Appareil frigorifique (100) selon la revendication 1, **caractérisé en ce que** la première et la seconde coques de boîtier (103-1, 103-2) sont reliées par une charnière (111).

3. Appareil frigorifique (100) selon la revendication 2, **caractérisé en ce que** la charnière (111) est une charnière à film.

4. Appareil frigorifique (100) selon l'une des revendications 1 à 3, **caractérisé en ce que** le boîtier de réception (103) comprend un moyen d'encliquetage (113) pour encliqueter la première et la seconde coques de boîtier (103-1, 103-2).

5. Appareil frigorifique (100) selon l'une des revendications 1 à 4, **caractérisé en ce que** la première coque de boîtier (103-1) comprend une première partie d'un orifice (115) pour insérer un câble (117) et la seconde coque de boîtier (103-2) comprend une seconde partie d'un orifice (115) pour insérer le câble.

6. Appareil frigorifique (100) selon l'une des revendications précédentes, **caractérisé en ce que** les nervures d'écartement (119-2) du côté sans câble (105-2) du condensateur (105) sont disposées sur le côté intérieur en direction longitudinale du boîtier de réception (103).

7. Appareil frigorifique (100) selon l'une des revendications précédentes, **caractérisé en ce que** le boîtier de réception (103) a une forme cylindrique.

8. Appareil frigorifique (100) selon la revendication 7, **caractérisé en ce que** le boîtier de réception (103) comprend à une extrémité de la forme cylindrique un orifice (115) pour introduire un câble électrique (117).

9. Appareil frigorifique (100) selon l'une des revendications précédentes, **caractérisé en ce que** le condensateur (105) est reçu par le boîtier de réception (103) sur une surface enveloppante du condensateur (105).

10. Appareil frigorifique (100) selon l'une des revendications précédentes, **caractérisé en ce que** le boîtier de réception (103) est un boîtier en matière plastique.

11. Appareil frigorifique (100) selon l'une des revendications précédentes, **caractérisé en ce que** le boîtier de réception (103) peut être monté sur un rail de support (121) pour un compresseur (107).

12. Appareil frigorifique (100) selon la revendication 11, **caractérisé en ce que** le boîtier de réception (103) comprend un moyen d'encliquetage pour fixer le boîtier de réception (103) sur le rail de support (121).
